(19) Europäisches Patentamt
European Patent Office
Office européen des brevets

(11) **EP 2 623 417 B1**

(12) **FASCICULE DE BREVET EUROPEEN**

(45) Date de publication et mention
de la délivrance du brevet:
**25.12.2019 Bulletin 2019/52**

(51) Int Cl.:
***B64C 25/50*** *(2006.01)*

(21) Numéro de dépôt: **13153108.9**

(22) Date de dépôt: **29.01.2013**

(54) **Procédé de gestion d'une commande d'orientation d'une partie orientable d'un atterrisseur d'aéronef**

Steuerverfahren eines Ausrichtungsbefehls eines Gelenkteils eines Flugzeugfahrwerks

A method of managing a steering command for a steerable portion of aircraft landing gear

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2012 FR 1251094**

(43) Date de publication de la demande:
**07.08.2013 Bulletin 2013/32**

(73) Titulaire: **Safran Landing Systems**
**78140 Vélizy-Villacoublay (FR)**

(72) Inventeurs:
• **Benmoussa, Michael**
**78140 Vélizy-Villacoublay (FR)**

• **Poiret, David**
**78140 Vélizy-Villacoublay (FR)**
• **Fraval, Jérôme**
**78140 Vélizy-Villacoublay (FR)**

(74) Mandataire: **Parzy, Benjamin Alain et al**
**Cabinet Boettcher**
**16, rue Médéric**
**75017 Paris (FR)**

(56) Documents cités:
**WO-A1-2010/150760 WO-A2-2006/096446**
**FR-A1- 2 924 831**

## Description

L'invention concerne un procédé de gestion d'une commande d'orientation d'une partie orientable d'un atterrisseur d'aéronef.

## ARRIERE PLAN DE L'INVENTION

La plupart des aéronefs modernes comportent un atterrisseur auxiliaire situé sous le nez du fuselage de l'aéronef. Généralement, le contrôle de l'orientation de l'aéronef au sol est réalisé par une commande d'orientation d'une partie inférieure orientable de l'atterrisseur auxiliaire portant les roues, générant des ordres d'orientation à destination d'un actionneur d'orientation, par exemple un vérin à crémaillère ou un actionneur rotatif coopérant avec une couronne dentée solidaire en rotation de la partie inférieure orientable, ou encore un dispositif push-pull, comme divulgué dans le document WO 2010/150760.

La position angulaire de la partie orientable de l'atterrisseur auxiliaire est asservie à un ordre de commande provenant du poste de pilotage. Cet asservissement fait de manière classique appel à un contrôleur de type « Proportionnel Intégral Dérivé » (PID), qui délivre en sortie un courant de commande à destination de l'actionneur d'orientation.

L'ordre de commande est généré par la manœuvre, par un pilote ou un copilote, d'un volant spécialement prévu pour cet effet, d'un palonnier, ou de ces deux éléments simultanément. Des capteurs de position angulaire de l'atterrisseur auxiliaire mesurent la position angulaire de la partie orientable pour l'asservir à l'ordre de commande. Ces capteurs sont généralement des capteurs inductifs de déplacement en rotation (ou RVDT pour « Rotary Variable Differential Transformer »), ou des capteurs de type potentiomètre.

L'utilisation de ces capteurs angulaires pour déterminer l'orientation de l'aéronef rend la commande d'orientation susceptible à des erreurs de mesure induites par exemple par des pneumatiques dégonflés, par un déséquilibrage de l'atterrisseur, ou par des variations de positionnement des capteurs.

En outre, ces capteurs angulaires sont situés sur l'atterrisseur auxiliaire dans une zone particulièrement exposée, soumise notamment à des contraintes mécaniques importantes, à de fortes variations de température, et à des niveaux importants d'humidité. La fiabilité de ces capteurs est dégradée du fait de leur position, ce qui nécessite de les remplacer fréquemment.

## OBJET DE L'INVENTION

L'invention a pour objet un procédé de gestion d'une commande d'orientation d'une partie orientable d'un atterrisseur d'aéronef permettant de rendre la commande plus précise et plus fiable.

## RESUME DE L'INVENTION

En vue de la réalisation de ce but, on propose un procédé de gestion d'une commande d'orientation d'une partie orientable d'un atterrisseur auxiliaire d'aéronef, comportant la mise en œuvre d'un asservissement pour asservir un actionneur d'orientation à une consigne de position angulaire de la partie orientable, l'asservissement comportant un calcul d'erreur consistant à retrancher à la consigne de position angulaire un angle de référence. Selon l'invention, l'angle de référence est un angle déterminé par calcul en fonction d'une vitesse longitudinale et d'un taux de lacet de l'aéronef.

Ce procédé de gestion de commande ne nécessite pas l'utilisation d'un capteur angulaire pour déterminer l'angle de référence. Cet angle est obtenu à partir de la vitesse longitudinale et du taux de lacet, fournis par exemple par une centrale inertielle. La gestion de commande d'orientation de l'aéronef est donc basée directement sur des caractéristiques d'un déplacement réel de l'aéronef, et non plus sur une mesure de position angulaire fournie par un capteur de position angulaire soumis à de multiples sources d'erreur.

## BREVE DESCRIPTION DES DESSINS

L'invention sera mieux comprise à la lumière de la description qui suit en référence aux figures des dessins annexés parmi lesquelles :

- la figure 1 est une vue de dessus schématique d'un aéronef au sol en mouvement,
- la figure 2 est une représentation schématique d'une architecture d'un système de contrôle de l'orientation d'un aéronef, mettant un œuvre un procédé de gestion d'une commande d'orientation selon l'invention,
- la figure 3 est un schéma de principe illustrant un mode particulier de mise en œuvre du procédé de gestion d'une commande d'orientation selon l'invention.

## DESCRIPTION DETAILLEE DE L'INVENTION

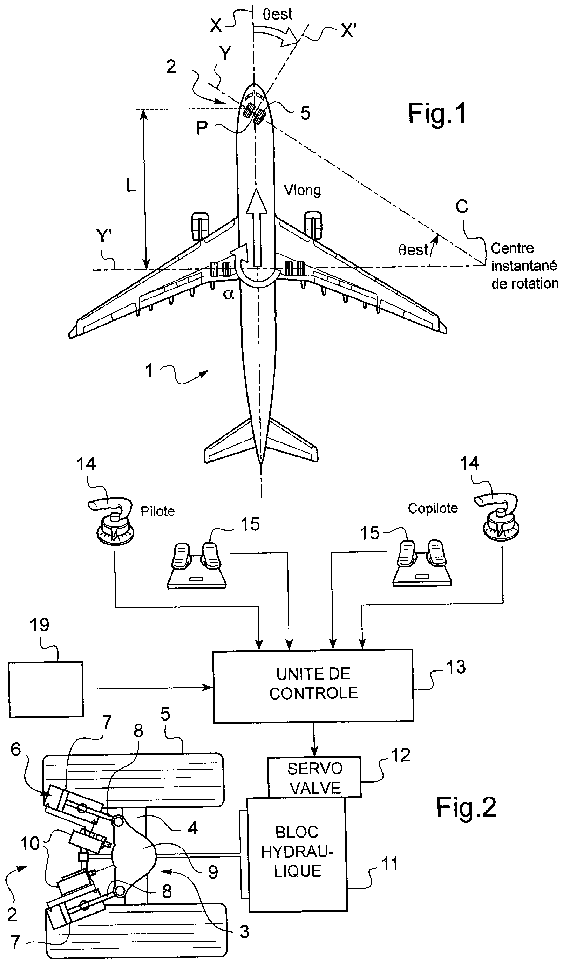

En référence aux figures 1 et 2, un aéronef 1 comporte un atterrisseur auxiliaire 2 dont une partie inférieure orientable 3 comporte un essieu 4 portant deux roues 5.

Ici, l'atterrisseur auxiliaire 2 est muni d'un actionneur d'orientation de type push-pull comportant deux vérins 6 ayant des corps 7 montés pivotant sur l'atterrisseur, et des tiges 8 dont l'extrémité est attelée à un collier 9 monté tournant sur l'atterrisseur. Le collier 9 est lui-même relié à la partie inférieure orientable par un compas, non représenté ici. Des distributeurs rotatifs 10 permettent de connecter les chambres des vérins 6 à l'arrivée de pression ou au retour selon leur position angulaire. Les vérins 6 sont reliés via les distributeurs rotatifs 10 à un bloc hydraulique 11 qui porte une servovalve 12 qui reçoit un courant de commande d'une unité de contrôle 13. Tout ceci est bien connu et n'est rappelé qu'à titre d'illustration.

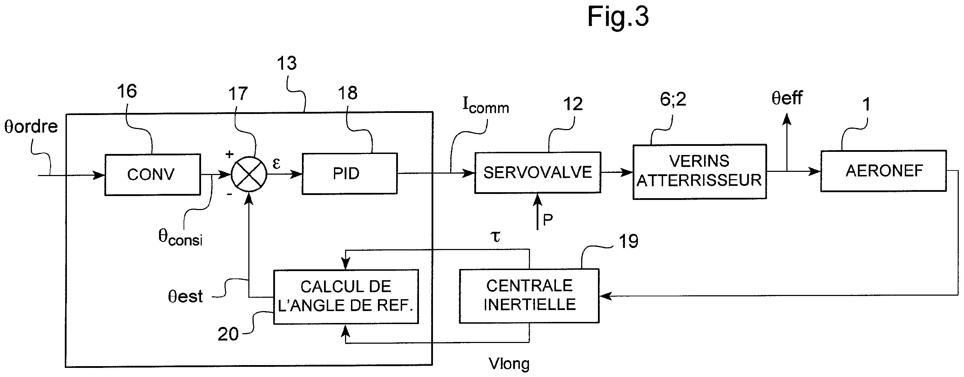

Pour commander l'orientation de la partie orientable 3 de l'atterrisseur auxiliaire 2, et donc de l'aéronef 1, le pilote ou le copilote disposent chacun d'un volant 14 et d'un palonnier 15 grâce auxquels le pilote ou le copilote transmet un ordre angulaire *θordre* (visible à la figure 3) à l'unité de contrôle 13. L'unité de contrôle 13 génère alors un courant de commande Icomm. Pour cela, un convertisseur 16 implémenté dans l'unité de contrôle 13 transforme tout d'abord l'ordre angulaire *θordre* en un angle de consigne θconsi d'un asservissement. Cet asservissement comporte un calcul d'erreur ε, réalisé par un différenciateur 17, consistant à retrancher à l'angle de consigne *θconsi* un angle estimé *θest* d'orientation de la partie orientable 3 de l'atterrisseur auxiliaire 2. Un contrôleur PID 18 agit ensuite sur l'erreur ε pour générer un courant de commande Icomm en fonction de cette erreur ε. Le courant de commande Icomm est alors transmis à la servovalve 12. En fonction de ce courant de commande Icomm, celle-ci calibre un débit de fluide hydraulique fourni aux vérins 6 à travers le bloc hydraulique 11. Les tiges 8 des vérins 6 commandent alors en conjugaison une rotation de la partie inférieure orientable 3 pour orienter celle-ci d'un angle effectif *θeff.*

Pour déterminer l'angle estimé d'orientation *θest* de l'atterrisseur auxiliaire à un certain instant t, et donc corriger l'angle de consigne *θconsi*, le procédé de gestion de l'invention utilise une valeur d'une vitesse longitudinale Vlong de l'aéronef 1 et un taux de lacet τ de l'aéronef 1. Ces informations sont fournies par une centrale inertielle 19 de l'aéronef 1.

L'angle estimé d'orientation *θest* est visible à la figure 1. L'angle estimé d'orientation *θest* est l'angle entre un axe longitudinale X de l'aéronef et un axe X' perpendiculaire à un axe Y de l'essieu 4 de l'atterrisseur auxiliaire 2. *θest* est aussi l'angle, vu au centre instantané de rotation C de l'aéronef 1 à l'instant t, entre l'axe Y et une ligne Y' passant par le centre instantané de rotation C et perpendiculaire à l'axe longitudinale X. Ici, la ligne Y' passe par l'axe des essieux des atterrisseurs principaux.

A partir de la valeur de la vitesse longitudinale Vlong, du taux de lacet τ, d'une distance L entre la ligne Y' et l'atterrisseur auxiliaire 2 de l'aéronef 1, une fonction de calcul 20 implémentée dans l'unité de contrôle 13 fournit une estimation de l'angle estimé *θest* de l'atterrisseur auxiliaire 2, obtenue par la formule suivante :

$$\theta est = \arctan(\frac{L.\tau}{Vlong})$$

Les différentes variables de cette formule sont exprimées dans les unités suivantes :

- *θ*est en degrés;

- Vlong en mètres par seconde ;
- L en mètres ;
- τ en degrés par seconde.

L'angle estimé *θest* de l'atterrisseur auxiliaire 2 est utilisé dans le procédé de gestion selon l'asservissement représenté à la figure 3.

La formule ci-dessus permet de fournir une estimation de *θest* pour des valeurs de Vlong non nulles. En pratique, on définit un seuil minimal pour la vitesse Vlong au-dessous duquel l'angle *θest* ne sera plus calculé. Lorsque la vitesse Vlong est inférieure au seuil minimal, on prévoit en outre de dépressuriser l'actionneur d'orientation pour éviter toute rotation intempestive de l'atterrisseur.

L'invention n'est pas limitée au mode de réalisation particulier qui vient d'être décrit, mais, bien au contraire, couvre toute variante entrant dans le cadre de l'invention tel que défini par les revendications.

Bien que l'ont ait décrit une boucle d'asservissement comportant un différenciateur et un PID, il est possible de mettre en œuvre tout type d'asservissement comportant au moins un calcul d'erreur consistant à retrancher à un angle de consigne un angle de référence, l'angle de référence étant déterminé en fonction de la vitesse longitudinale et du taux de lacet de l'aéronef.

Bien qu'ici, on ait illustré l'invention en application à un atterrisseur auxiliaire dont l'actionneur d'orientation comporte des vérins hydrauliques alimentés par une servovalve, on pourra également mettre en œuvre l'invention en application à un atterrisseur dont l'actionneur d'orientation comporte un ou plusieurs actionneurs électromécaniques alimentés par un contrôleur (ou EMAC).

**Revendications**

1. Procédé de gestion d'une commande d'orientation d'une partie orientable (3) d'un atterrisseur auxiliaire (2) d'aéronef (1), comportant la mise en œuvre d'un asservissement pour asservir un actionneur d'orientation (6) à une consigne (*θconsi*) de position angulaire de la partie orientable (3), l'asservissement comportant un calcul d'erreur (ε) consistant à retrancher à la consigne (*θconsi*) de position angulaire un angle de référence (*θest*), **caractérisé en ce que** l'angle de référence (*θest*) est un angle déterminé par calcul en fonction d'une vitesse longitudinale (Vlong) et d'un taux de lacet (τ) de l'aéronef (1).

2. Procédé de gestion d'une commande d'orientation selon la revendication 1, dans lequel l'angle de référence est déterminé selon la formule :

$$\theta est = \arctan(\frac{L.\tau}{Vlong})$$

où (Vlong) est la vitesse longitudinale de l'aéronef, ($\tau$) est le taux de lacet de l'aéronef, et (L) une distance entre un atterrisseur principal de l'aéronef et l'atterrisseur auxiliaire (2).

3. Procédé de gestion d'une commande d'orientation selon l'une des revendications 1 à 2, dans lequel l'asservissement est réalisé par une boucle d'asservissement comportant un contrôleur PID (18) pour générer une commande d'orientation (Icomm) de l'actionneur (6) en fonction de l'erreur($\varepsilon$).

4. Procédé de gestion d'une commande d'orientation selon l'une des revendications 1 à 3, dans lequel l'asservissement est mis en œuvre dans une unité de contrôle (13) disposée dans l'aéronef (1), l'unité de contrôle (13) fournissant un courant de commande (Icomm) à un organe de commande (12) pour fournir une puissance calibrée à l'actionneur d'orientation (6).

**Patentansprüche**

1. Steuerverfahren zum Steuern einer Ausrichtungssteuerung eines schwenkbaren Teils (3) eines Hilfsfahrwerks (2) eines Luftfahrzeugs (1), umfassend die Implementierung einer Regelung zum Regeln eines Ausrichtungsaktors (6) auf einen Winkelpositionssollwert ($\theta consi$) für den schwenkbaren Teil (3), wobei die Regelung die Berechnung eines Fehlers ($\varepsilon$) umfasst, die darin besteht, einen Referenzwinkel ($\theta$est) von dem Winkelpositionssollwert ($\theta consi$) abzuziehen, **dadurch gekennzeichnet, dass** der Referenzwinkel ($\theta est$) ein Winkel ist, der durch Berechnung in Abhängigkeit von einer Längsgeschwindigkeit (Vlong) und einer Gierrate ($\tau$) des Luftfahrzeugs (1) bestimmt wird.

2. Steuerverfahren zum Steuern einer Ausrichtungssteuerung nach Anspruch 1, bei dem der Referenzwinkel gemäß der Formel berechnet wird:

$$\theta est = \arctan\left(\frac{L.\tau}{Vlong}\right),$$

wobei (Vlong) die Längsgeschwindigkeit des Luftfahrzeugs ist, ($\tau$) die Gierrate des Luftfahrzeugs ist und (L) ein Abstand zwischen einem Hauptfahrwerk des Luftfahrzeugs und dem Hilfsfahrwerk (2) ist.

3. Steuerverfahren zum Steuern einer Ausrichtungssteuerung nach einem der Ansprüche 1 bis 2, bei dem die Regelung durch einen Regelkreis erfolgt, der einen PID-Regler (18) umfasst, um eine Ausrichtungssteuerung (Icomm) für den Aktor (6) in Abhängigkeit des Fehlers ($\varepsilon$) zu erzeugen.

4. Steuerverfahren zum Steuern einer Ausrichtungssteuerung nach einem der Ansprüche 1 bis 3, bei dem die Regelung in einer Steuereinheit (13) implementiert wird, die in dem Luftfahrzeug (1) angeordnet ist, wobei die Steuereinheit (13) einen Steuerstrom (Icomm) an ein Steuerorgan (12) liefert, um dem Ausrichtungsaktor (6) eine kalibrierte Leistung zu liefern.

**Claims**

1. A method of managing a steering command for a steerable portion (3) of nose landing gear (2) of an aircraft (1), the method implementing servo-control to servo-control a steering actuator (6) to an angle position setpoint ($\theta$set) for the steerable portion (3), the servo-control including calculating an error ($\varepsilon$) by subtracting a reference angle ($\theta$est) from the angle position setpoint ($\theta$set), the method being **characterized in that** the reference angle ($\theta$est) is an angle determined by calculation as a function of a longitudinal speed (Vlong) and a yaw rate ($\tau$) of the aircraft (1).

2. A method of managing a steering command according to claim 1, wherein the reference angle is determined using the formula:

$$\theta est = \arctan\left(\frac{L.\tau}{Vlong}\right)$$

where Vlong is the longitudinal speed of the aircraft, $\tau$ is the yaw rate of the aircraft, and L is the distance between main landing gear of the aircraft and the nose landing gear (2).

3. A method of managing a steering command according to claim 1 or claim 2, wherein the servo-control is performed by a servo-control loop including a PID controller (18) for generating a steering command (Icomm) for the actuator (6) as a function of the error ($\varepsilon$).

4. A method of managing a steering command according to any one of claims 1 to 3, wherein the servo-control is implemented in a controller (13) arranged in the aircraft (1), the controller (13) delivering a command current (Icomm) to a command member (12) for delivering calibrated power to the steering actuator (6).

Fig.1

Fig.2

# Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010150760 A